# EUROPÄISCHE PATENTSCHRIFT

(11) **EP 3 786 058 B1**
(45) Veröffentlichungstag und Bekanntmachung des Hinweises auf die Patenterteilung: **17.11.2021**
(21) Anmeldenummer: 20189526.5
(22) Anmeldetag: 05.08.2020
(51) Int. Cl.: B64C 13/04, B62D 1/04, B64C 25/50, B64C 31/036

(54) **VORRICHTUNG ZUR STEUERUNG EINES LUFTFAHRZEUGS**
DEVICE FOR CONTROLLING AN AIRPLANE
DISPOSITIF DE COMMANDE D'UN AÉRONEF

(30) Priorität: 30.08.2019 DE 102019123260
(43) Veröffentlichungstag der Anmeldung: 03.03.2021
(73) Patentinhaber: Ostermeier, Jürgen, 31084 Freden (DE)
(72) Erfinder: Ostermeier, Jürgen, 31084 Freden (DE)
(74) Vertreter: Taruttis, Tilman

(56) Entgegenhaltungen:
- WO-A1-2017/060149
- WO-A2-2009/023941
- WO-A2-2016/057003
- US-A1- 2013 031 997

## Beschreibung

Die Vorrichtung betrifft eine Steuerung eines Luftfahrzeugs mit einem Steuerhorn, welches zur Steuerung des Luftfahrzeugs vorgesehen ist.

Aus dem Stand der Technik sind Steuerungen für das Steuern eines Luftfahrzeugs oder Luftsportgeräts bekannt, nachfolgend zusammenfassend kurz Luftfahrzeug genannt, bei denen ein Pilot unter anderem mittels eines Steuerhorns die Lage des Flugzeugs in der Luft steuert. Dokument WO 2016/057003 A2 offenbart ein direktionales Steuerungssystem für ein Hybridtransportluftfahrzeug mit einem lenkbaren Rad zur Verwendung im Bodenbetrieb. Das Steuerungssystem umfasst eine erste Welle mit einem ersten Steuereingang und eine zweite Welle mit einem zweiten Steuerungseingang, die sich durch die erste Welle erstreckt. Dokument US 2013/031997 A1 offenbart ein Steuerhorn eines Luftfahrzeugs zum Steuern von Steuerflächen und einem Radlandewerk am Boden. Dokument WO 2016/057003 A2 offenbart ein Fahrzeuglenkrad mit klappbaren Segmenten. Dokument WO 2009/023941 A2 offenbart ein weiteres Steuerhorn mit verschiebbarer Säule, d.h. welches translatorisch und rotatorisch bewegbar ist.

Ein herkömmliches Steuerhorn weist dabei typischerweise zwei Griffe auf, die typischerweise gemeinsam mit einer zentralen Lenk- oder Steuersäule verbunden sind, welche einerseits die zulässigen Bewegungen des Steuerhorns definiert und andererseits mit den Steuerflächen des Luftfahrzeugs verbunden ist, dass die Bewegungen des Steuerhorns die Steuerflächen bewirkt. So bewirkt typischerweise eine Bewegung des Steuerhorns nach vorne oder hinten im Flug eine Nickbewegung des Luftfahrzeugs um die Querachse, die typischerweise vom Höhenruder bewirkt ist. Eine Drehbewegung bewirkt typsicherweise eine Ansteuerung des Querruders und damit eine Rollbewegung um die Längsachse des Luftfahrzeugs. Während bei kleineren Luftfahrzeugen, beispielsweise bei einmotorigen Motorflugzeugen, das Steuerhorn rein mechanisch mit dem Höhen- und Querruder verbunden ist, wird bei großen Verkehrsflugzeugen die Bewegung des Steuerhorns auf Aktuatoren, beispielsweise Elektromotoren oder Hydraulikzylinder, übertragen, die mit den Steuerflächen verbunden sind. Derartige Luftfahrzeuge, die für Bewegungen um die Hoch-, die Längs- und Querachse jeweils separate Steuerflächen, also das Seiten-, das Quer- und das Höhenruder aufweisen, werden als dreiachsgesteuerte Luftfahrzeuge bezeichnet.

Im Unterschied dazu gibt es Luftfahrzeuge, die nicht mittels Höhen-, Seiten- und Querruder gesteuert werden, sondern die einen Tragschirm zur Erzeugung des Auftriebs verwenden und die über ein Anbremsen der Hinterkanten des Tragschirms gesteuert werden. Derartige motorgetriebene Luftfahrzeuge mit einem Tragschirm werden in der Literatur auch als Motorschirm bezeichnet. In einer Variante kann der Pilot dabei den Motor während des Fliegens auf dem Rücken tragen und in einem Gurtzeug hängen. In einer anderen und hier relevanten Alternative kann ein solches Luftfahrzeug mit Tragschirm auch ein Cockpit aufweisen, welches in einem Fahrgestell angeordnet ist. Ein solcher Motorschirm mit einem dreirädrigen Fahrgestell, das als Chassis bezeichnet wird, wird dabei typischerweise als Trike bezeichnet. Bei herkömmlichen Trikes steuert der Pilot den Schirm in herkömmlicher Weise über Leinen, die er beispielsweise über Griffe mit den Händen hält. Am Boden steuert der Pilot eines solchen Trikes die Richtung über das Vorderrad, welches er üblicherweise mit den Füßen lenkt.

Neben solchen dreirädrigen Chassis für Motorschirme werden zunehmend Chassis mit vier Rädern insbesondere für doppelsitzige Motorschirme verwendet. Derartige Vierradgestelle werden in der einschlägigen Literatur auch Quads genannt. Während des Fliegens hängt das Chassis in herkömmlicher Weise an Leinen unter dem Tragschirm und der Tragschirm wird über Steuerleinen gesteuert. Dabei wird typischerweise über eine rechte bzw. linke Steuerleine, sogenannte Bremsleinen, die Rechte bzw. linke Hinterkante des Tragschirms durch Herunterziehen angebremst, wodurch sich jeweils entsprechend sowohl der Auftrieb als auch der Widerstand jeweils erhöhen und der Schirm in der Luft gesteuert in seiner Richtung und seiner Geschwindigkeit werden kann. Am Boden wird das Quad ähnlich einem Kraftfahrzeug über die Vorderräder gelenkt.

Während des Startens eines Motorschirms ist mit dem Chassis die Startrichtung zu halten bzw. steuern, gleichzeitig ist der Tragschirm zu steuern. Insbesondere während des sogenannten Aufziehens des Tragschirms, wenn also der Tragschirm durch ein Beschleunigen und Rollen des Chassis zunächst vom Boden in die Luft gezogen wird, sodass dieser Auftrieb erzeugen kann, muss der Tragschirm so gesteuert werden, dass dieser sich gleichmäßig und über dem Chassis entfaltet. Bei herkömmlichen Tragschirmen steuert der Pilot den Tragschirm dabei mit den Steuerleinen, deren Enden typischerweise Steuerschlaufen angebracht sind, welche der Pilot mit den Händen hält. Damit entsteht die Problematik, dass der Pilot während der Startphase auch das vierrädrige Chassis, dessen Vorderräder über ein Lenkrad gesteuert werden, lenken muss. Ebenso ist beim Landen des Tragschirms die Landerichtung mit dem Tragschirm und zum Zeitpunkt des Aufsetzens auch mit dem Chassis zu steuern, sodass sich eine ähnliche Problematik ergibt.

Diese Aufgabe wird mit einer Vorrichtung zur Steuerung gelöst, die ein Steuerhorn umfasst, welches einen ersten Steuerhornabschnitt und einen zweiten Steuerhornabschnitt umfasst, wobei die Steuerhornabschnitte jeweils mit einer Einrichtung zum Steuern des Luftfahrzeugs verbunden sind. Der erste und zweite Steuerhornabschnitt sind jeweils translatorisch separat bewegbar und mit der Einrichtung zum Steuern des Luftfahrzeugs verbunden. Gleichzeitig sind die Steuerhornabschnitte rotatorisch gleichsinnig und um eine gemeinsame Achse bewegbar. Die Einrichtung zum Steuern des Luftfahrzeugs dient dabei zur Umsetzung der mit dem Steuerhorn bzw. den Steuerhornabschnitten durchgeführten Steuerbewegungen in entsprechende Bewegungen der Steuerflächen und/oder der Steuerung der Räder des Luftfahrzeugs. Die translatorisch separat bewegbaren Steuerhornabschnitte können dabei in Steuerbewegungen einer Steuerfläche umgesetzt werden, sodass in einer Ausführungsform eine translatorische Bewegung des Steuerhornabschnitts zum Betätigen einer ersten Steuerfläche und eine translatorische Bewegung des zweiten Steuerhornabschnitts zum Betätigen einer zweiten Steuerfläche vorgesehen ist. In einer Ausführungsform kann der erste Steuerhornabschnitt mittels einer Steuerleine mit einer ersten Steuerfläche, beispielsweise einer ersten Hinterkante, eines Tragschirms eines Motorschirms verbunden sein. Der zweite Steuerhornabschnitt kann entsprechend mittels einer zweiten Steuerleine mit einer zweiten Steuerfläche verbunden sein, beispielsweise mit einer zweiten Hinterkante des Tragschirms. Zieht der Pilot nun den ersten oder den zweiten Steuerhornabschnitt auf sich zu, d.h. er übt eine translatorische Bewegung des Steuerhornabschnitts aus, so bewirkt dies ein Herunterziehen der mit dem Steuerhornabschnitt jeweils verbundenen Hinterkante des Tragschirms. Auf diese Weise kann der Pilot eines Motorschirms den Tragschirm über ein Ziehen oder ein entsprechendes Nachlassen des Steuerhornabschnitts steuern.

Die beschriebene Vorrichtung zur Steuerung kann ebenso in einem dreiachsgesteuerten Luftfahrzeug eingesetzt werden. In herkömmlichen Luftfahrzeugen wird das Seitenruder, welches mit einem lenkbaren Teil des Fahrwerks verbunden sein kann, typischerweise über Fußpedale betätigt, sodass ein Pilot das Seitenruder durch ein entsprechendes Treten bzw. Verschieben eines Fußpedals steuert. Die Funktion dieser Fußpedale kann durch die translatorisch separat bewegbaren Steuerhornabschnitte ersetzt werden, sodass das Seitenruder oder eine andere Steuerfläche über die Steuerhornabschnitte angesteuert werden können, sodass die Fußpedale nicht mehr benötigt bzw. betätigt werden müssen. In diesem Fall sind beide Steuerhornabschnitte mit derselben Steuerfläche des Luftfahrzeugs verbunden. Auf diese Weise können beispielsweise Piloten mit eingeschränkter Beweglichkeit der Beine und/oder Füße die Steuerung über Fußpedale durch ein Betätigen des jeweiligen Steuerhornabschnitts ersetzen.

Alternativ kann eine translatorische Bewegung des ersten Steuerhornabschnitts in eine erste Bewegung der Räder des Chassis des Luftfahrzeugs und eine translatorische Bewegung des zweiten Steuerhornabschnitts in eine andere Bewegung der Räder des Chassis des Luftfahrzeugs umgesetzt werden. Allgemein bietet die beschriebene Steuerung mit einem Steuerhorn, welches einen ersten und einen zweiten separat bewegbaren Steuerhornabschnitt aufweist, die Möglichkeit der Steuerung des Luftfahrzeugs, beispielsweise mittels einer aerodynamischen Steuerfläche oder der mittels des Fahrwerks.

Im Folgenden wird die Erfindung anhand von Figuren näher beschrieben. Dabei zeigen
- Fig. 1: eine erste schematische Ansicht der Vorrichtung zur Steuerung eines Luftfahrzeugs mit einem Ausschnitt eines Ausschnitts eines Chassis eines Luftfahrzeugs;
- Fig. 2: eine zweite schematische Ansicht der Vorrichtung zur Steuerung eines Luftfahrzeugs mit einem Ausschnitt eines Chassis des Luftfahrzeugs, wobei die Steuerung ausgelenkt ist,
- Fig. 3: eine schematische Detailansicht einer Lenk-Steuersäule einer erfindungsgemäßen Vorrichtung,
- Fig. 4: eine schematische Ansicht einer Anordnung der Vorrichtung in einem Cockpit.

Die im Folgenden beschriebenen Figuren sind nicht maßstabsgetreu. Sie zeigen in schematischer Darstellung lediglich eine mögliche Ausführungsform der Vorrichtung

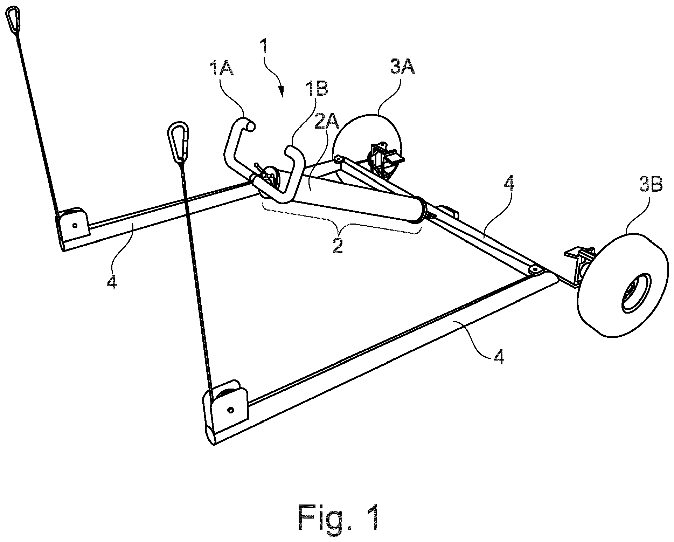

Fig. 1 zeigt eine Vorrichtung zur Steuerung eines Luftfahrzeugs mit einem Steuerhorn 1, wobei das Luftfahrzeug selbst in der Figur nicht dargestellt ist, sondern lediglich die Vorrichtung zur Steuerung sowie Teile des Chassis 4 bzw. des Fahrwerks des Luftfahrzeugs.

Das Steuerhorn 1 weist einen ersten Steuerhornabschnitt 1A auf, wobei der Steuerhornabschnitt einen Handgriff bildet oder umfasst. Weiterhin umfasst das Steuerhorn einen zweiten Steuerhornabschnitt 1B, welcher ebenfalls einen Handgriff bildet oder umfasst. Dabei sind zur Verdeutlichung der Vorrichtung weitere Ausgestaltungen eines typischen Steuerhorns, beispielsweise Taster für die Betätigung des Sprechfunks oder andere an oder in einem Steuerhom typischerweise vorhandenen Elemente aus Gründen der Übersichtlichkeit nicht dargestellt. Die Steuerhornabschnitte 1A, 1B sind in der dargestellten Ausführungsform so gestaltet, dass diese gemeinsam ein Steuerhorn 1 bilden und die beiden Steuerhornabschnitte für das Umgreifen jeweils mit einer Hand vorgesehen sind.

Beide Steuerhornabschnitte 1A und 1B sind jeweils mit einer Einrichtung 2 verbunden, die zum Steuern des Luftfahrzeugs insoweit vorgesehen ist, als dass die jeweiligen translatorischen Bewegungen eines jeweiligen Steuerhornabschnitts 1A, 1B und ein gemeinsames rotatorisches Bewegen, d.h. ein Drehen der beiden Steuerhornabschnitte um eine gemeinsame Achse, in entsprechende Bewegungen von Steuerflächen bzw. einer Steuerung des Fahrwerks umgesetzt werden.

Die Einrichtung 2 dient zur Umsetzung der Bewegungen der Steuerhornabschnitte 1A, 1B in Bewegungen von Steuerflächen bzw. Rädern 3A, 3B des Luftfahrzeugs und kann dabei, wie weiter unten näher erläutert, insbesondere bei kleineren Luftfahrzeugen rein mechanisch ausgestaltet sein, sodass die Steuerhornabschnitte mechanisch mit den Steuerflächen und/oder dem Fahrwerk verbunden sind. In einer alternativen und hier nicht dargestellten Ausführungsform, insbesondere aber nicht ausschließlich für große Luftfahrzeuge, kann die Einrichtung 2 auch Sensoren und Aktuatoren umfassen, wobei die Sensoren die Bewegungen des Steuerhorns 1 bzw. der Steuerhornabschnitte 1A, 1B erfassen, die Aktuatoren einerseits basierend auf den erfassten Bewegungen der Steuerhornabschnitte angesteuert werden und andererseits die Aktuatoren mechanisch und kraftübertragend mit den Steuerflächen oder dem Fahrwerk eines Luftfahrzeugs verbunden sind. In diesem Falle könnte die Vorrichtung 2 zur Umsetzung der Bewegungen der Steuerhornabschnitte dienen und ein sogenanntes Fly-by-Wire ermöglichen.

In der hier dargestellten Ausführungsform umfasst die Einrichtung 2 einen Zylinder 2A, in welchem die Umsetzung einer gemeinsamen und gleichgerichteten rotatorischen Bewegung des ersten und zweiten Steuerhornabschnitts um eine gemeinsame Achse in eine Rotationsbewegung einer zentralen Welle bewirkt wird. Werden die beiden Steuerhornabschnitte 1A und 1B wie bei einem herkömmlichen, einstückigen Steuerhorn drehrichtungsgleich und um eine gemeinsame Achse gedreht, so wird diese Drehbewegung auf eine gemeinsame Welle übertragen. Die Welle kann aus der Einrichtung 2 herausgeführt und mit einem Steuergestänge oder vergleichbaren zur Ansteuerung des Luftfahrzeugs verbunden sein. In der hier beschriebenen Ausführungsform kann die Welle mechanisch mit dem Fahrwerk bzw. dem Chassis 4 verbunden sein und zur Steuerung der Räder 3A, 3B verwendet werden, sodass mit einer Drehbewegung des Steuerhorns 1, d.h. mit einer gleichgerichteten Rotationsbewegung der beiden Steuerhornabschnitte 1A, 1B um eine gemeinsame Achse, die Vorderräder des Chassis eines Motorschirms beispielsweise über ein hier nicht näher dargestelltes Lenkgestänge angelenkt bzw. gesteuert werden.

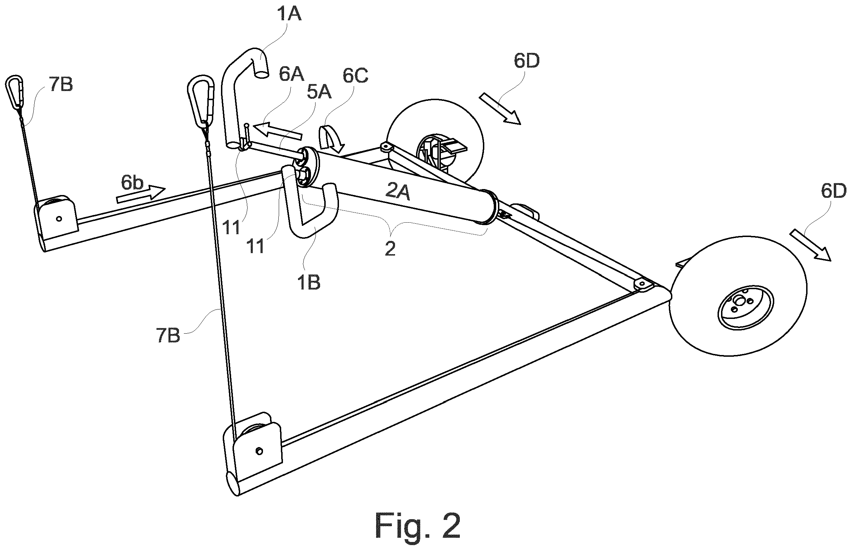

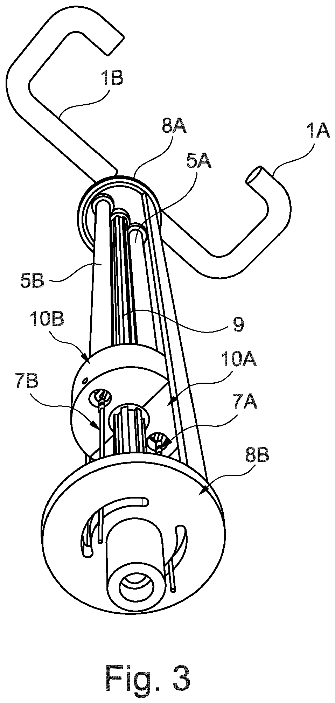

Die Steuerhornabschnitte 1A und 1B sind mit einer jeweiligen Steuerstange 5A, 5B verbunden, siehe Figuren 2 bzw. 3, wobei die Steuerstangen separat in dem Zylinder 2 geführt sind und eine translatorische Bewegung in axialer Richtung des Zylinders 2 zulassen, sodass ein Steuerhornabschnitt mit einer translatorischen Bewegung bewegt werden kann, siehe Pfeil 6A in Fig. 2. In der hier erläuterten Ausführungsform wird eine translatorische Bewegung eines Steuerhornabschnitts 1A bzw. 1B in eine jeweilige mechanische Seilzugbewegung umgesetzt, sodass beim Herausziehen eines Steuerhornabschnitts aus dem Zylinder 2 ein jeweiliges Steuerseil gezogen wird. Wird beispielsweise der Steuerhornabschnitt 1A in Richtung des Pfeils 6A translatorisch bewegt, also gezogen, so bewirkt dies eine Bewegung des Steuerseils 7A in Richtung des Pfeils 6B. Dabei kann die Einrichtung 2 in einer Ausführungsform so ausgestaltet sein, dass ein gleichzeitiges translatorisches Ziehen der beiden Steuerhornabschnitte in dieselbe Richtung möglich ist und in eine gleichsinnige Zugrichtung eines jeweiligen Steuerseils umgesetzt wird, insbesondere zur Verwendung der Steuerung eines Tragschirms eines Motorschirms. Die Steuerhornabschnitte 1A und 1B können dementsprechend dazu mit einem jeweiligen Steuerseil 7a, 7b eines Tragschirms verbunden sein, sodass mit einer translatorischen (Zug-)Bewegung eines Steuerhornabschnitts eine jeweilige Hinterkante des Tragschirms angesteuert werden kann. Ein Pilot kann dementsprechend durch das Ziehen eines jeweiligen Steuerhornabschnitts die Hinterkante des Tragschirms herunterziehen, wobei er durch entsprechendes Ziehen eines Steuerhorns lediglich eine Seite des Tragschirms durch Herunterziehen anbremsen kann, sodass im Fluge dadurch eine Kurve eingeleitet wird. Der Pilot kann jedoch durch gleichzeitiges Ziehen der beiden Steuerhornabschnitte 1A, 1B die Hinterkanten des Tragschirms gleichzeitig herunterziehen und damit abbremsen und damit ein Abbremsen des gesamten Tragschirms bewirken.

In einer alternativen Ausführungsform kann die Vorrichtung so ausgestaltet sein, dass die beiden Steuerhornabschnitte 1A, 1B um eine Mittellage herum lediglich entgegengesetzt gerichtet translatorisch bewegt werden können. Dementsprechend kann ein Pilot einen Steuerhornabschnitt zu sich ziehen, wenn er gleichzeitig den jeweils anderen Steuerhornabschnitt von sich wegbewegt. Die entgegengesetzten Bewegungen der beiden Steuerhornabschnitte werden in entsprechend entgegengesetzte Bewegungen beispielsweise eines Steuerseils, umgesetzt und können zur Ansteuerung entsprechend geeigneter Steuerflächen eines Luftfahrzeugs, beispielsweise zur Ansteuerung des Seitenruders eines Luftfahrzeugs eingesetzt werden. Ein Pilot kann damit durch Heranziehen des einen und entsprechendes Wegschieben des jeweils anderen Steuerhornabschnitts ein Seitenruder betätigen, welches in herkömmlichen Luftfahrzeugen typischerweise über Fußpedale angesteuert wird.

Die Steuerstangen 5A und 5B sind in der Einrichtung 2 zur Steuerung auch so geführt, dass diese bei einer gleichgerichteten Drehbewegung der Steuerhornabschnitte 1A, 1B eine Rotationsbewegung des Steuerhorns 1 um eine gemeinsame Achse bewirken. Diese Rotationsbewegung wird in der Einrichtung 2 in eine entsprechende Bewegung beispielsweise einer Steuerstange oder eines Steuerseils umgesetzt, wobei diese Steuerstange bzw. das Steuerseil in den Figuren nicht dargestellt ist. Über diese -nicht dargestellte- Steuerstange bzw. das Steuerseil kann eine weitere Steuerfläche bzw. ein Paar von Steuerflächen des Luftfahrzeugs, beispielsweise die Querruder, oder, wie in Figur 2 dargestellt, das Fahrwerk angesteuert werden. In der hier dargestellten Ausführungsform sind die beiden Steuerhornhälften 1A, 1B mit einer gemeinsamen, drehbar gelagerten Achse verbunden. Die drehbare Achse ist hier funktional mit den Fronträdern des Chassis des Luftfahrzeugs verbunden, sodass damit die Fahrtrichtung des Chassis und damit des Luftfahrzeugs am Boden gesteuert werden kann.

Figur 2 zeigt die erfindungsgemäße Vorrichtung, die identisch zu der in Fig. 1 gezeigten ist, wobei in Fig. 2 ein Steuerhornabschnitt 1A in Richtung des Pfeils 6A translatorisch aus der in Fig. 1 gezeigten Position bewegt ist und gleichzeitig beide Steuerhornabschnitte 1A, 1B gleichsinnig in Richtung des Pfeils 6C und um eine gemeinsame Achse gedreht sind, sodass die Lenk-Steuersäule 2A in Richtung des Pfeils 6C gedreht ist. Die Lenk-Steuersäule ist dementsprechend drehbar gelagert.

Weiterhin ist die Drehung der Steuerhornabschnitte auf die dargestellten Räder, d.h. hier die Fronträder des Chassis, übertragen, sodass dies in Fahrtrichtung nach rechts, siehe Pfeil 6D, eingeschlagen sind.

Im Folgenden wird angenommen, dass die Vorrichtung zur Steuerung eines Motorschirms verwendet wird, wobei für den Piloten ein vierrädriges Chassis, ein sogenanntes Quad, vorgesehen ist, sodass der Pilot sowohl den Tragschirm als auch das Chassis mit der Vorrichtung steuern kann. Dabei sind während der Landung sowie während der Startphase des Motorschirms der Tragschirm sowie das Chassis in der Richtung gleichzeitig und unabhängig voneinander zu steuern. Bei derartigen herkömmlichen Motorschirmen mit einem Quad als Chassis wird der Tragschirm typischerweise durch herkömmliche Steuerleinen gesteuert, welche mit Steuerschlaufen versehen sind und vom Piloten mit den Händen erfasst werden, und die Fronträder des Chassis sind mit einem herkömmlichen Lenker oder Lenkrad zur Ansteuerung verbunden. Während der Startphase des Motorschirms, insbesondere während des Aufziehens des Tragschirms vom Boden weg, besteht damit das Problem, dass sowohl der Tragschirm als auch das Chassis zu steuern sind. Dabei ist es notwendig, dass der Tragschirm unabhängig von einer Richtungsänderung des Chassis gesteuert werden kann, beispielsweise um ein Überschießen des Tragschirms beim Aufziehen des Schirms zu vermeiden. Fig. 2 zeigt eine Steuersituation, in welcher das Chassis in Fahrtrichtung nach rechts gelenkt wird, durch das Ziehen der linken Steuerleine 7a der Tragschirm jedoch links angebremst wird, als ob eine Linkskurve eingeleitet werden soll. Diese Ansteuerung ist durch die Vorrichtung zur Steuerung möglich, wobei der Pilot diese Ansteuerung sowohl des Tragschirms als auch des Chassis lediglich die Steuerhornabschnitte 1A, 1B bewirkt, die er mit seinen Händen halten kann.

Figur 3 zeigt eine Implementierung der Steuerungseinrichtung 2. In dieser Ausführungsform umfasst die Steuerungseinrichtung 2 eine rohrförmige und zylindrische Lenk-Steuersäule, im Folgenden kurz als Zylinder 2A bezeichnet, der an beiden Enden mit einem jeweiligen Deckel 8A, 8B verschlossen und fixiert ist , wobei wenigstens die Steuerstangen 5A, 5B durch den Deckel 8A der einen Seite und Steuerseile 7A, 7B durch den Deckel der anderen Seite 8B geführt sind; die Deckel 8A, 8B weisen dementsprechend Aussparungen auf. In dem Deckel 8A sind dabei Präzisionslager zur axialen Führung der Steuerstangen vorgesehen. Die Aussparungen in Deckel 8B sind entsprechend als kreisabschnittsförmige Langlöcher gestaltet, durch welche die Steuerseile berührungsfrei geführt sind. Die Steuerstangen 5A, 5B können insbesondere Präzisionsstahlwellen oder Kohlefaserwellen sein, welche in Präzisionslagern gelagert sein können. In dem Zylinder 2A ist eine Welle 9 zentrisch in dem Deckel 8A und 8B gelagert und fixiert, wobei die Welle 9 in dieser Ausführungsform eine Keilwelle ist. Entlang der Keilwelle 9 sind eine erste und eine zweite halbschalenförmige Keilwellenbuchsen 10A, 10B geführt, die in formschlüssigem Eingriff mit der Keilwelle 9 stehen. Die Keilwellenbuchsen 10A, 10B sind dabei vorzugsweise so ausgebildet, dass diese in axialer Richtung des Zylinders 2A gleiten können, sodass diese leicht axial entlang der Keilwelle 9 gleiten können und gleichzeitig und zusammen mit der Keilwelle 9 mitsamt dem Zylinder 2A leicht rotiert werden können. Die Keilwellenbuchsen 10A, 10B können dazu entsprechend beschichtet oder mehrteilig ausgebildet sein und ein geeignetes Gleitelement aufweisen. So kann eine Keilwellenbuchse ein jeweiliges Gleitelement umfassen, welches formschlüssig an der Innenwandung des Zylinders 2A entlang gleiten kann und insbesondere eine positionsunabhängige und spielfreie Bewegung in axialer Richtung des Zylinders 2A ermöglicht. Die Keilwellenbuchsen 10A, 10B sind jeweils mit dem Ende einer Steuerstange 5A, 5B verbunden, die wiederum an ihrem jeweiligen anderen Ende mit einem Steuerhornabschnitt 1A, 1B verbunden sind. Die Keilwellenbuchsen übertragen damit ein gleichgerichtetes Drehen der beiden Steuerhornabschnitte 1A, 1B auf die Keilwelle. Auf diese Weise sind die Steuerhornabschnitte 1A, 1B separat und jeweils form- und kraftschlüssig mit der in der Lenk-Steuersäule 2 zentral angeordneten Welle rotatorisch verbunden. Weiterhin sind die Steuerstangen 5A, 5B mit Steuerseilen 7A, 7B verbunden, sodass eine translatorische Bewegung eines jeweiligen Steuerhornabschnitts 1A, 1B auf ein jeweiliges Steuerseil 7A, 7B übertragen wird. Durch ein Ziehen oder Nachlassen eines Steuerhornabschnitts 1A, 1B wird entsprechend ein Steuerseil 7A, 7B gezogen bzw. nachgelassen. In der hier dargestellten Ausführungsform ist die Verbindung einer jeweiligen Steuerstange 5A, 5B mit einem Steuerseil 7A, 7B durch eine Verbindung der mit der Steuerstange jeweils verbundenen Keilwellenbuchse 10A, 10B mit einem Steuerseil 7A, 7B bewirkt.

Die Steuerseile 7A, 7B können in herkömmlicher Weise mit Steuerflächen des Luftfahrzeugs verbunden sein, wobei diese in der hier beschriebenen Ausführungsform insbesondere zur Steuerung des Tragschirms mit diesem verbunden sein können. Dabei ist zu beachten, dass die Steuerseile immer so geführt sind, dass diese nicht verklemmen oder blockiert werden können. Dazu können die Steuerseile über entsprechend geeignete Umlenkrollen geführt werden, wobei die Umlenkrollen in einem Ausführungsbeispiel auch zur Umsetzung der Länge eines Steuerwegs ausgebildet sein können. Eine solche Rolle kann beispielsweise durch eine Umlenkrolle realisiert werden, welche eine erste Rolle und eine damit axial verbundene zweite Rolle mit anderem Rollendurchmesser aufweist, wobei ein Steuerseil auf die erste gewickelt ist und das mit der Steuerfläche verbundene Anlenkseil auf der zweiten Rolle gewickelt ist, sodass über das Verhältnis der Rollendurchmesser eine entsprechende Umsetzung der Weglängen von Steuer- und Anlenkseil bewirkt ist.

Wie oben erwähnt übertragen die Keilwellenbuchsen 10A, 10B ein gleichsinniges Drehen der beiden Steuerhornabschnitte 1A, 1B auf die Keilwelle 9, so dass diese zusammen mit dem Zylinder um ihre lange Achse rotiert. Die Keilwelle 9 ist in der Einrichtung 2 bzw. in beiden Deckeln 8A und 8B entsprechend gelagert und fixiert. Der von den Steuerhornabschnitten entfernte Deckel 8B ist dazu vorgesehen und entsprechend mit weiteren Elementen der Steuerung des Luftfahrzeugs verbunden, um eine Rotation der Einrichtung zur Steuerung 2 zur Ansteuerung von Steuerflächen oder zur Ansteuerung des Fahrwerks des Fluggeräts weiterzugeben. Insbesondere in der hier beschriebenen Ausführungsform ist der Deckel 8B mindestens mit dem Fahrwerk so verbunden, dass die Räder 3A, 3B durch eine Rotation angelenkt sind und damit die Richtung des Luftfahrzeugs am Boden steuerbar ist. Ein Pilot kann damit durch ein gleichsinniges Rotieren der Steuerhornabschnitte das Luftfahrzeug am Boden lenken, während er durch ein Ziehen bzw. Nachlassen eines jeweiligen Steuerhornabschnitts den Tragschirm steuern kann.

Weiterhin können die Steuerstangen 5A, 5B so ausgestaltet sein, dass diese in der Länge verstell- und fixierbar sind, um eventuell auftretende Giermomente des Luftfahrzeugs um die Hochachse zu trimmen oder um die Steuerung an die Körpergröße des Piloten anzupassen. Die Steuerstangen 5A, 5B können dazu jeweils eine an sich herkömmliche Verstell- und Fixiereinrichtung 11 aufweisen.

Die gesamte Vorrichtung zur Steuerung des Luftfahrzeugs kann in einer Ausführungsform mittig zum Luftfahrzeug, insbesondere mittig zu einem Motorschirm, also in der Längsachse angeordnet sein. In einer bevorzugten alternativen Ausführungsform kann die gesamte Vorrichtung außerhalb der Längsachse des Luftfahrzeugs angeordnet sein. Bei einem zweisitzigen Motorschirm können damit insbesondere die beiden Sitze in Flugrichtung nebeneinander angeordnet sein.

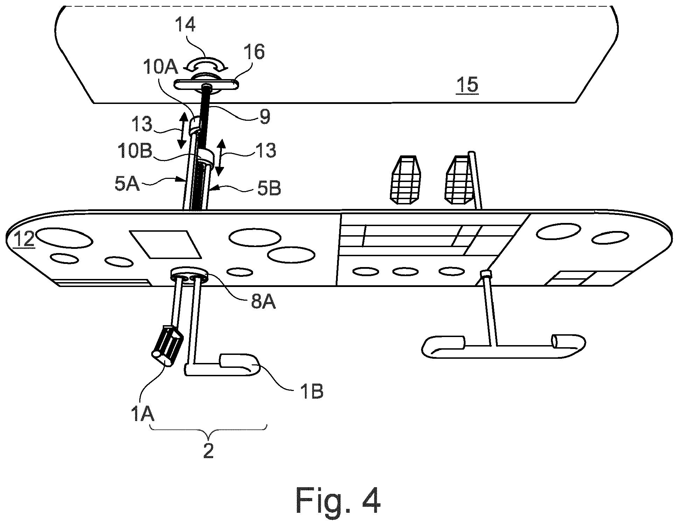

Fig. 4 zeigt eine schematische Ansicht auf ein Instrumentenbrett 12, in welchem rechts ein herkömmliches Steuerhorn und links eine erfindungsgemäße Einrichtung 2 zur Steuerung eines Luftfahrzeugs angeordnet sind. Das Luftfahrzeug kann in diesem Fall ein dreiachsgesteuertes Flugzeug sein. Die erfindungsgemäße Einrichtung 2 zur Steuerung des Flugzeugs weist ein erfindungsgemäßes Steuerhorn 1 mit einem ersten Steuerhornabschnitt 1A und einem zweiten Steuerhornabschnitt 1B auf, wobei der erste Steuerhornabschnitt 1A eine alternative Ausgestaltung eines Steuerhornabschnitts zeigt. Wie bereits oben beschrieben sind die Steuerhornabschnitte mit einer jeweiligen Steuerstange 5A, 5B verbunden, die jeweils mit einer Keilwellenbuchse 10A, 10B verbunden sind, welche in Eingriff mit der Keilwelle 9 stehen, jedoch translatorisch an dieser entlang gleiten können, siehe Pfeile 13.

Die Keilwelle 9 ist in dem Deckel 8A festgelegt, der in dem Instrumentenbrett 12 drehbar gelagert ist, sodass eine Drehung der Steuerhornabschnitte 1A, 1B über die Steuerstangen 5A, 5B und die Keilwellenbuchsen 10A, 10B auf die Keilwelle übertragen werden kann. Weiterhin ist die Keilwelle 9 auch an ihrem anderen Ende drehbar gelagert, beispielsweise in einem Brandschott 15 des Flugzeugs.

Die Keilwelle 9 kann wiederum über eine mechanische Verbindung oder sonstige Kopplung 16 mit der Steuerung oder Steuerflächen, beispielsweise mit den Querrudern des Flugzeugs, verbunden sein, sodass eine Drehung, siehe Pfeil 14, der Keilwelle 9 in eine Bewegung der Querruder umgesetzt wird. Ebenso, wie bereits oben beschrieben, können die Keilwellen 10A, 10B beispielsweise über Steuerseile, die hier nicht dargestellt sind, mit der Steuerung, beispielsweise dem Seitenruder des Flugzeugs, dem Bugfahrwerk und dem Höhenruder gekoppelt sein, sodass eine translatorische Bewegung eines Steuerhornabschnitts 1A oder 1B in eine entsprechende Bewegung beispielsweise des Seitenruders und Bugrades und/oder des Höhenruders umgesetzt wird. In diesem Falle kann die erfindungsgemäße Steuerung 2 insbesondere so ausgestaltet sein, dass die Steuerhornabschnitte 1A, 1B um eine Mittellage bewegbar sind, ähnlich wie bei herkömmlichen Steuerorganen.

Auf diese Weise kann die erfindungsgemäße Einrichtung 2 zur Steuerung auch in einem dreiachsgesteuerten Flugzeug verwendet werden, wobei die translatorische Bewegung des Steuerhornabschnittes 1A eine entsprechende Bewegung von Fußpedalen ersetzen kann.

### Bezugszeichenliste

- 1: Steuerhorn
- 1A, 1B: Steuerhornabschnitt
- 2: Einrichtung zur Steuerung
- 2A: Zylindrische Lenk-Steuersäule, Zylinder
- 3A,B: Rad
- 4: Chassis
- 5A, 5B: Steuerstange
- 6A-6D: Pfeil
- 7A, 7B: Steuerseil
- 8A, 8B: Deckel
- 9: Welle, insbesondere Keilwelle
- 10A, 10B: erste bzw. zweite Keilwellenbuchse
- 11: Längenfixiereinrichtung, Längenverstelleinrichtung
- 12: Instrumentenbrett
- 13: Pfeile
- 14: Pfeil
- 15: Brandschott
- 16: Kopplung

## Patentansprüche

1. Vorrichtung zur Steuerung eines Luftfahrzeugs umfassend ein Steuerhorn (1), welches einen ersten und einen zweiten Steuerhornabschnitt (1A, 1B) aufweist, der jeweils mit einer Steuerungseinrichtung (2) zum Steuern des Luftfahrzeugs verbunden ist, **dadurch gekennzeichnet, dass** der erste und der zweite Steuerhornabschnitt (1A, 1B) translatorisch jeweils separat und rotatorisch gleichsinnig bewegbar und zur Steuerung des Luftfahrzeugs vorgesehen sind.

2. Vorrichtung nach Anspruch 1, wobei das Luftfahrzeug Räder (3) und Steuerflächen umfasst und der erste und zweite Steuerhornabschnitt (1A, 1B) jeweils mit einem Rad (3A, 3B) und einer Steuerfläche funktional steuernd verbindbar ist.

3. Vorrichtung nach einem der vorstehenden Ansprüche, wobei die Steuerungseinrichtung (2) zum Steuern des Luftfahrzeugs eine zylindrische Lenk-Steuersäule (2A) mit einer darin zentral angeordneten Welle (9) umfasst, wobei der erste und der zweite Steuerhornabschnitt (1A, 1B) jeweils separat rotatorisch und kraftschlüssig mit der zentralen Welle verbunden sind.

4. Vorrichtung nach Anspruch 3, wobei die zentrale Welle (9) eine Keilwelle ist, und wobei der erste und zweite Steuerhornabschnitt (1A, 1B) über eine jeweilige Steuerstange (5A, 5B) mit einer jeweiligen Keilwellenbuchse (10A, 10B) verbunden ist, wobei eine jede Keilwellenbuchse rotatorisch kraftschlüssig mit der Keilwelle verbunden ist.

5. Vorrichtung nach Anspruch 4, wobei eine Keilwellenbuchse axial entlang der Keilwelle (9) bewegbar angeordnet ist.

6. Vorrichtung nach einem der vorstehenden Ansprüche, wobei eine Keilwellenbuchse jeweils mittels eines Steuerseils (7A, 7B) mit einer Steuerfläche des Luftfahrzeugs verbindbar ist.

7. Vorrichtung nach einem der vorstehenden Ansprüche, wobei das Luftfahrzeug einen Tragschirm umfasst und wobei ein Steuerhornabschnitt (1A, 1B) zur Steuerung des Tragschirms vorgesehen und mit diesem verbindbar ist.

8. Vorrichtung nach einem der vorstehenden Ansprüche, sofern von Anspruch 3 abhängig, wobei das Luftfahrzeug mindestens ein steuerbares Rad (3A, 3B) aufweist und die zentral angeordnete Welle (9) zum Lenken des Rades (3A, 3B) vorgesehen und mit diesem verbindbar ist.

9. Vorrichtung nach einem der vorstehenden Ansprüche 7-8, wobei das Luftfahrzeug ein vierrädriges Chassis (4) umfasst, dessen Fronträder (3A, 3B) und Tragschirm gleichzeitig und voneinander unabhängig mittels der Steuerhornabschnitte (1A, 1B) steuerbar sind.

10. Vorrichtung nach einem der vorstehenden Ansprüche 7-9, wobei die Steuerungseinrichtung (2) seitlich zur Längsachse des Luftfahrzeugs angeordnet werden kann.

## Claims

1. Device for controlling an aircraft, comprising
a yoke (1) having a first and a second yoke portion (1A, 1B), each of which are connected to a control system (2) for controlling the aircraft, **characterized in that** the first and the second yoke portion (1A, 1B) can each be separately moved in a translational manner and moved in the same direction in a rotational manner and are provided for controlling the aircraft.

2. Device according to claim 1, wherein the aircraft comprises wheels (3) and control surfaces and the first and second yoke portions (1A, 1B) can each be functionally controllably connected to a wheel (3A, 3B) and a control surface.

3. Device according to any of the preceding claims, wherein the control system (2) for controlling the aircraft comprises a cylindrical steering control column (2A) having a shaft (9) arranged centrally therein, wherein the first and second yoke portions (1A, 1B) are each separately connected to the central shaft in a rotational and non-positive manner.

4. Device according to claim 3, wherein the central shaft (9) is a splined shaft, and wherein the first and second yoke portions (1A, 1B) are connected to a respective splined shaft bushing (10A, 10B) via a respective control rod (5A, 5B), wherein each splined shaft bushing is connected to the splined shaft in a rotational and non-positive manner.

5. Device according to claim 4, wherein a splined shaft bushing is arranged to be axially movable along the splined shaft (9).

6. Device according to any of the preceding claims, wherein a splined shaft bushing can be connected to a control surface of the aircraft in each case by means of a control cable (7A, 7B).

7. Device according to any of the preceding claims, wherein the aircraft comprises a drag parachute and wherein a yoke portion (1A, 1B) is provided for controlling the drag parachute and can be connected thereto.

8. Device according to any of the preceding claims, if dependent on claim 3, wherein the aircraft has at least one controllable wheel (3A, 3B) and the centrally arranged shaft (9) is provided for steering the wheel (3A, 3B) and can be connected thereto.

9. Device according to any of the preceding claims 7-8, wherein the aircraft comprises a four-wheeled chassis (4), the front wheels (3A, 3B) and the drag parachute of which can be controlled simultaneously and independently of one another by means of the yoke portions (1A, 1B).

10. Device according to any of the preceding claims 7-9, wherein the control system (2) can be arranged laterally to the longitudinal axis of the aircraft.

## Revendications

1. Dispositif de commande d'un aéronef comprenant
une manche de commande (1), laquelle comporte une première et une seconde section de manche de commande (1A, 1B), lesquelles sont respectivement reliées à un agencement de commande (2) permettant de commander l'aéronef, **caractérisé en ce que** la première et la seconde
section de manche de commande (1A, 1B) sont mobiles en translation respectivement séparément et en rotation dans le même sens et sont fournies pour commander l'aéronef.

2. Dispositif selon la revendication 1, dans lequel l'aéronef comprend des roues (3) et des gouvernes et les première et seconde sections de manche de commande (1A, 1B) peuvent être respectivement reliées de manière fonctionnellement commandable à une roue (3A, 3B) et à une gouverne.

3. Dispositif selon l'une quelconque des revendications précédentes, dans lequel l'agencement de commande (2) permettant de commander l'aéronef comprend une colonne de commande et de direction (2A) cylindrique comportant un arbre (9) disposé au centre de celle-ci, dans lequel les première et seconde sections de manche de commande (1A, 1B) sont respectivement séparées et reliées à l'arbre central en rotation et par complémentarité de force.

4. Dispositif selon la revendication 3, dans lequel l'arbre central (9) est un arbre cannelé, et dans lequel les première et seconde sections de manche de commande (1A, 1B) sont reliées, par l'intermédiaire d'une tige de commande (5A, 5B) respective, à une douille d'arbre cannelé (10A, 10B) respective, dans lequel chaque douille d'arbre cannelé est reliée en rotation et par complémentarité de force à l'arbre cannelé.

5. Dispositif selon la revendication 4, dans lequel une douille d'arbre cannelé est disposée mobile axialement le long de l'arbre cannelé (9).

6. Dispositif selon l'une quelconque des revendications précédentes, dans lequel une douille d'arbre cannelé peut être reliée respectivement au moyen d'un câble de commande (7A, 7B) à une gouverne de l'aéronef.

7. Dispositif selon l'une quelconque des revendications précédentes, dans lequel l'aéronef comprend un écran de support et dans lequel une section de manche de commande (1A, 1B) est fournie pour commander l'écran de support et peut être reliée à celui-ci.

8. Dispositif selon l'une quelconque des revendications précédentes, si elle dépend de la revendication 3, dans lequel l'aéronef comporte au moins une roue (3A, 3B) commandable et l'arbre (9) disposé au centre est fourni pour diriger la roue (3A, 3B) et peut être relié à celle-ci.

9. Dispositif selon l'une quelconque des revendications 7 à 8 précédentes, dans lequel l'aéronef comprend un châssis (4) à quatre roues dont les roues avant (3A, 3B) et l'écran de support peuvent être commandés simultanément et indépendamment les uns des autres au moyen des sections de manche de commande (1A, 1B).

10. Dispositif selon l'une quelconque des revendications 7 à 9 précédentes, dans lequel l'agencement de commande (2) peut être disposé latéralement par rapport à l'axe longitudinal de l'aéronef.
